# EUROPÄISCHE PATENTSCHRIFT

(11) **EP 2 994 338 B1**
(45) Veröffentlichungstag und Bekanntmachung des Hinweises auf die Patenterteilung: **04.11.2020**
(21) Anmeldenummer: 14724346.3
(22) Anmeldetag: 30.04.2014
(51) Int. Cl.: B60L 3/00, B60L 3/04, B60L 53/24, B60L 50/51, B60L 58/15

(54) **ÜBERSPANNUNGSSCHUTZVORRICHTUNG UND VERFAHREN ZUM BETRIEB EINER ÜBERSPANNUNGSSCHUTZVORRICHTUNG**
SURGE ARRESTER AND METHOD FOR OPERATING A SURGE ARRESTER
DISPOSITIF DE PROTECTION CONTRE LES SURTENSIONS ET PROCEDE DE FONCTIONNEMENT D'UN DISPOSITIF DE PROTECTION CONTRE LES SURTENSIONS

(30) Priorität: 10.05.2013 DE 102013208602
(43) Veröffentlichungstag der Anmeldung: 16.03.2016
(73) Patentinhaber: Robert Bosch GmbH, 70442 Stuttgart (DE)
(72) Erfinder: EISENHARDT, Martin, 71272 Renningen (DE)
(86) Internationale Anmeldenummer: PCT/EP2014/058787
(87) Internationale Veröffentlichungsnummer: WO 2014/180722

(56) Entgegenhaltungen:
- WO-A1-2011/146198
- DE-A1- 19 617 847
- US-A- 5 637 413
- US-A1- 2005 077 867
- US-A1- 2007 279 010
- US-A1- 2014 217 958
- US-B1- 8 222 861

## Beschreibung

Die vorliegende Erfindung betrifft eine Überspannungsschutzvorrichtung und ein Verfahren zum Betrieb einer Überspannungsschutzvorrichtung.

### Stand der Technik

Die Druckschrift US 2005/077867 A1 offenbart ein Verfahren zum Ermitteln der Leistungsgrenzen eines elektrischen Energiespeichers für ein Hybridfahrzeug. Das Verfahren umfasst einen Schritt zum Erfassen einer temperaturabhängigen Überspannung.

Die Druckschrift US 2007/279010 A1 offenbart eine Lade- und Entladesteuerung für eine Kondensatorstromquelle mit einem Überspanungsschutz.

Die Druckschrift WO2011/146198 A1 offenbart eine Vorrichtung zum Laden einer Vielzahl Batteriezellen und zum Ausgleichen der Spannungen der einzelnen Batteriezellen.

In elektrischen Antrieben für Hybrid- oder Elektrofahrzeuge werden heutzutage üblicherweise Drehfeldmaschinen eingesetzt. Zum Betrieb dieser Drehfeldmaschinen werden Pulswechselrichter verwendet. Hauptbestandteile von Pulswechselrichtern sind ein Zwischenkreiskondensator und Halbleiterschalter in Form von Leistungshalbleitern, wie zum Beispiel MOSFET-Transistoren oder IGBT. Für den Antrieb des Fahrzeuges im motorischen Betrieb wird dabei einer Traktionsbatterie elektrische Leistung in Form eines Gleichstroms entnommen und dabei in die Batterie entladen. Der Pulswechselrichter setzt den Gleichstrom dabei in einen geeigneten Wechselstrom um, mit dem Drehfeldmaschine betrieben wird.

Darüber hinaus kann die Drehfeldmaschine, beispielsweise während des Abbremsen des Fahrzeugs, auch als Generator betrieben werden. Dabei dreht sich der Leistungsfluss um. Ein Wechselstrom von der Drehfeldmaschine wird durch den Pulswechselrichter in einen Gleichstrom umgeformt, mit dem die Batterie geladen wird. Um die Hauptbestandteile des Pulswechselrichters nicht zu schädigen, darf dabei eine vorgegebene Spannungsobergrenze nicht überschritten werden. Daher hat jeder Pulswechselrichter eine maximale Spannungsgrenze, bis zu der er betrieben werden darf, ohne geschädigt zu werden. Hohe Betriebsspannungen können dabei insbesondere im generatorischen Betrieb auftreten. Während des Ladens der Traktionsbatterie steigt durch den Ladestrom aufgrund des Innenwiderstandes der Batterie die Klemmenspannung an der Batterie an. Die dabei auftretende Batteriespannung kann dabei auch über die maximal zulässige Spannungsgrenze des Pulswechselrichters ansteigen.

Pulswechselrichter, die auch zum Laden einer Batterie eingesetzt werden, sind daher mit einer Überspannungsschutzfunktion ausgestattet. Die Druckschrift DE 198 35 316 A1 offenbart eine gesteuerte Gleichrichterbrücke mit einem Überspannungsschutz. Die Gleichrichterbrücke wird mit einer Wechselspannung von einem Generator gespeist. Zur Vermeidung von Überspannungsspitzen umfasst die Gleichrichterbrücke eine Spannungsschutzschaltung.

Ferner kann zum Schutz der Komponenten in einem Pulswechselrichter der Pulswechselrichter mit einer Derating-Funktion ausgestattet sein. Hierbei wird zunächst beim Überschreiten einer ersten Spannungsschwelle der maximal zulässige Batterieladestrom reduziert. Somit sinkt der Spannungsanstieg während des weiteren Ladens der Batterie. Dabei kann der Ladestrom umso mehr abgesenkt werden, je höher die Batteriespannung steigt. Beim Erreichen einer weiteren, höheren Spannungsschwelle wird das Aufladen der Batterie vollständig unterbunden. Somit erfolgt dann auch kein Spannungsanstieg mehr.

Der Spannungsanstieg während des Ladens der Batterie hängt dabei vom Innenwiderstand der Batterie ab. Der Innenwiderstand der Batterie wiederum ist abhängig von zahlreichen Parametern, wie zum Beispiel Ladezustand, Temperatur und Alterungszustand der Batterie. Daher können die Kennwerte, mit der der Ladestrom angepasst wird, nicht für alle Betriebsfälle optimal ausgewählt werden. Bei ungünstigen Betriebsfällen ist es möglich, dass der Ladestrom nicht schnell genug reduziert wird und daraufhin die maximal zulässige Spannungsgrenze für die Bauelemente im Pulswechselrichter trotz Derating-Funktion überschritten wird. Somit wäre auch in diesem Fall eine Schädigung des Pulswechselrichters möglich.

Daher wird in der Regel ein weiterer, unabhängiger Überspannungsschutz eingesetzt, der bei Überschreiten einer weiteren Spannungsgrenze den Pulswechselrichter vom normalen Regelbetrieb in einen sicheren Zustand überführt. In diesem sicheren Betrieb wird das Aufladen der Batterie schlagartig unterbunden. Beispielsweise kann dieser unabhängige, weitere Überspannungsschutz die Klemmen der Drehfeldmaschine im Generatorbetrieb kurzschließen und somit ein weiteres Laden der Batterie unterbinden.

Ein solcher Wechsel vom Regelbetrieb in den sicheren Zustand des Pulswechselrichters führt jedoch bei einem Elektrofahrzeug zu spürbaren Fahrkomforteinbußen. Das Drehmoment an der Welle der Drehfeldmaschine kann im sicheren Zustand nicht mehr geregelt werden. Daher stellt sich ein für die Drehfeldmaschine bei gegebener Drehzahl charakteristisches Bremsmoment ein. Ferner ist der Wechsel vom sicheren Zustand zurück in den Regelbetrieb nur über ein Rücksetzen des Pulswechselrichters möglich. Dies führt zu einem unerwünscht langen Verweilen im sicheren Zustand.

Es besteht daher ein Bedarf nach einem verbesserten Überspannungsschutz. Insbesondere besteht ein Bedarf nach einem Überspannungsschutz, der einen möglichst langen Betrieb im Regelbetrieb ermöglicht.

### Offenbarung der Erfindung

Die vorliegende Erfindung schafft eine Überspannungsschutzvorrichtung für eine Ladevorrichtung mit den Merkmalen des Patentanspruchs 1 und ein Verfahren zum Betrieb einer Überspannungsschutzvorrichtung für eine Ladevorrichtung mit den Merkmalen des Patentanspruch 7.

Es ist eine Idee der vorliegenden Erfindung, die Spannungsschwelle für das Ansprechen eines Überspannungsschutzes adaptiv anzupassen. Hierzu wird das Ansprechverhalten eines weiteren, übergeordneten Spannungsdetektors ausgewertet. Spricht der übergeordnete Spannungsdetektor an, so wird die Spannungsschwelle des adaptiven Spannungsdetektors abgesenkt, um ein weiteres Ansprechen des übergeordneten Spannungsdetektors zu verhindern. Ferner ist es auch möglich, die Spannungsschwelle des adaptiven Spannungsdetektors anzuheben, um so iterativ eine optimale Spannungsschwelle für den adaptiven Spannungsdetektor zu ermitteln.

Ein Vorteil des adaptiven Anpassens der Spannungsschwelle für den zweiten Spannungsdetektor besteht darin, dass somit stets ein optimaler Betriebspunkt für den adaptiven Spannungsdetektor eingestellt werden kann. Insbesondere ist es somit nicht erforderlich, beim Festlegen der Spannungsschwellen zusätzliche Sicherheitszuschläge hinzuzuaddieren, um zum Beispiel Bauteiltoleranzen oder ähnliches ausreichend zu berücksichtigen.

Ein weiterer Vorteil besteht darin, dass die adaptiv ermittelte Spannungsschwelle auch dann angepasst werden kann, wenn sich aufgrund von veränderten Rahmenbedingungen, wie zum Beispiel aufgrund der Alterung der Batterie, der Innenwiderstand einer zu ladenden Batterie ändert.

Gemäß einer Ausführungsform ist der zweite Spannungsdetektor ferner dazu ausgelegt, ein Überschreiten einer dritten Spannungsschwelle zu erkennen. In einer speziellen Ausführungsform wird dabei die dritte Spannungsschwelle in Abhängigkeit von einem erkannten Überschreiten der ersten Spannungsschwelle angepasst. Durch die Definition dieser dritten Spannungsschwelle können bereits zwischen der zweiten und der dritten Spannungsschwelle Maßnahmen ergriffen werden, die einen Anstieg von auftretenden Spannungen reduzieren, so dass gefährliche Überspannungen weniger oft auftreten. Durch das Absenken der zweiten Spannungsschwelle beim Ansprechen des ersten Spannungsdetektors kann sukzessive der zweite Spannungsdetektor so eingestellt werden, dass der erste Spannungsdetektor möglichst selten anspricht.

Gemäß einer weiteren Ausführungsform umfasst die Überspannungsschutzvorrichtung der vorliegenden Erfindung ferner eine Speichervorrichtung, die dazu ausgelegt ist, die zweite und/oder dritte Spannungsschwelle abzuspeichern. Durch das Abspeichern der angepassten Spannungsschwellen stehen diese ermittelten Werte der Spannungsschwellen zu einem späteren Zeitpunkt zur Verfügung, so dass der zweite Spannungsdetektor bei einer späteren Initialisierung unmittelbar mit den neuen angepassten Spannungsschwellen betrieben werden kann.

Die vorliegende Erfindung umfasst ferner eine Ladevorrichtung für einen elektrischen Energiespeicher mit einer erfindungsgemäßen Überspannungsschutzvorrichtung.

Gemäß einer speziellen Ausführungsform ist die Ladevorrichtung ferner dazu ausgelegt, einen Ladestrom für den elektrischen Energiespeicher zu reduzieren, wenn der zweite Spannungsdetektor ein Überschreiten der dritten Spannungsschwelle erkennt.

In einer weiteren Ausführungsform wird die erfindungsgemäße Ladevorrichtung von einer Drehfeldmaschine gespeist.

In einer alternativen Ausführungsform wird die erfindungsgemäße Ladevorrichtung von einer Drehfeldmaschine gespeist.

Ferner umfasst die vorliegende Erfindung ein Elektrofahrzeug mit einer erfindungsgemäßen Ladevorrichtung.

Weitere Merkmale und Vorteile von Ausführungsformen der Erfindung ergeben sich aus der nachfolgenden Beschreibung in Bezug auf die beigefügten Zeichnungen.

### Kurze Beschreibung der Zeichnungen

Es zeigen:
- Fig. 1:: eine schematische Darstellung eines Aufbaus eines Systems aus Drehfeldmaschine, Batterie und Überspanungsschutz, wie es einer Ausführungsform der vorliegenden Erfindung zugrunde liegt;
- Fig. 2:: eine schematische Darstellung eines Ladereglers mit einer Überspannungsschutzvorrichtung gemäß einer weiteren Ausführungsform der vorliegenden Erfindung;
- Fig. 3:: ein Diagramm zur schematischen Darstellung der Spannungsgrenzen, wie sie einer Überspannungsschutzvorrichtung gemäß einer weiteren Ausführungsform der vorliegenden Erfindung zugrunde liegen; und
- Fig. 4:: eine schematische Darstellung eines Verfahrens zum Betrieb einer Überspannungsschutzvorrichtung gemäß einer weiteren Ausführungsform der vorliegenden Erfindung.

Die in den Figuren dargestellten Zeichnungen sind zum Teil perspektivische Darstellungen von Elementen, die aus Gründen der Übersichtlichkeit nicht notwendigerweise maßstabsgetreu abgebildet sind. Gleiche Bezugszeichen bezeichnen im Allgemeinen gleichartige oder gleichwirkende Komponenten.

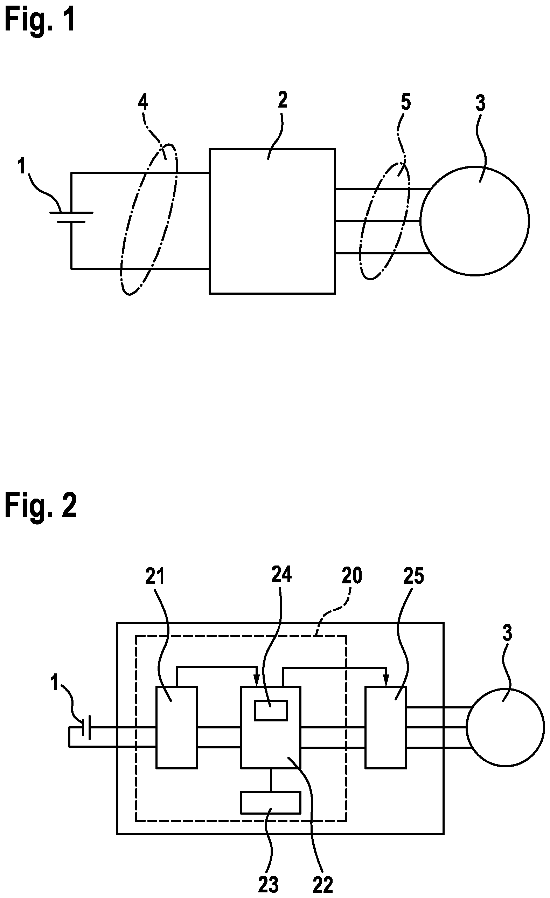

Figur 1 zeigt eine schematische Darstellung eines Antriebssystems für ein Elektro- oder Hybridfahrzeug. Eine Batterie 1 speist einen Gleichstrom 4 in einem Pulswechselrichter 2 ein. Der Pulswechselrichter 2 erzeugt aus diesem Gleichstrom einen Wechsel- bzw. Drehstrom 5, der zum Antrieb der Drehfeldmaschine 3 dient.

Weiterhin kann zum Beispiel während des Abbremsens eines Elektro- bzw. Hybridfahrzeugs die Drehfeldmaschine 3 als Generator betrieben werden. Dabei erzeugt die Drehfeldmaschine 3 einen Wechsel- bzw. Drehstrom, der durch den Pulswechselrichter 2 in einen Gleichstrom umgewandelt wird. Dieser Gleichstrom 4 lädt die Batterie 1 auf. In Abhängigkeit vom Innenwiderstand der Batterie 1, sowie dem von der Drehfeldmaschine bereitgestellten Energie variiert dabei die Spannung an den Klemmen der Batterie 1.

Figur 2 zeigt eine detaillierte Darstellung eines Pulswechselrichters 2 mit einer Überspannungsschutzvorrichtung 20 gemäß einer Ausführungsform der Erfindung. Im Generatorbetrieb erzeugt die Drehfeldmaschine 3 einen Wechsel- bzw. Drehstrom, der durch die Leistungselektronik 25 in einen Gleichstrom umgewandelt wird. Mit diesem Gleichstrom wird die Batterie 1 aufgeladen. Da die Komponenten der Leistungselektronik 25, wie zum Beispiel die darin enthaltenen Halbleiterschalter, nur bis zu einer vorgegebenen maximalen Spannungsobergrenze getrieben werden dürfen, muss die Leistungselektronik 25 vor unzulässigen Spannungsüberhöhungen geschützt werden. Solche Spannungsüberhöhungen können beispielsweise dadurch auftreten, dass während des Ladevorgangs in Abhängigkeit vom Innenwiderstand der Batterie 1 die Spannung über den Klemmen der Batterie 1 ansteigt. Der Innenwiderstand der Batterie 1 hängt dabei von zahlreichen Parametern ab, wie zum Beispiel Temperatur, Ladestrom oder Alterungszustand der Batterie. Daher ist eine präzise Vorhersage der Klemmenspannung während des Ladevorgangs nicht oder nur sehr aufwändig möglich.

Die Leistungselektronik 25 muss daher vor eventuell auftretenden gefährlichen Spannungsüberhöhungen geschützt werden. Hierzu umfasst der Pulswechselrichter 2 einen ersten Spannungsdetektor 21 und einen zweiten Spannungsdetektor 22. Der erste Spannungsdetektor 21 spricht dabei beim Überschreiten einer ersten, fest vorgegebenen Spannungsschwelle an und unterbindet daraufhin vollständig das weitere Laden der Batterie 1. Somit fließt weiterhin kein Ladestrom in die Batterie und eine Spannungsüberhöhung in der Leistungselektronik 25 wird unterbunden.

Der erste Spannungsdetektor 21 ist dabei als unabhängige Hardware ausgebildet. Die erste Spannungsschwelle, bei der dieser Spannungsdetektor 21 anspricht, wird dabei durch die verwendeten Komponenten des Spannungsdetektors 21 fest vorgegeben. Beispielsweise kann der Spannungsdetektor 21 hierzu Bauelemente umfassen, die bei Überschreiten einer charakteristischen Spannung sehr rasch in einen leitfähigen Zustand übergehen. Solche Bauelemente sind zum Beispiel sogenannte Zener-Dioden oder Avalanche-Dioden.

Der Pulswechselrichter 2 umfasst ferner einen zweiten Spannungsdetektor 22, der ebenfalls die Batteriespannung überwacht und dabei ein Überschreiten eines zweiten Spannungswertes detektiert. Die zweite Spannungsschwelle, bei der der zweite Spannungsdetektor 22 anspricht, ist dabei normalerweise geringer als die erste Spannungsschwelle, bei der der erste Spannungsdetektor 21 anspricht. Somit soll erreicht werden, dass vorzugsweise der zweite Spannungsdetektor 22 anspricht. Der zweite Spannungsdetektor 22 detektiert darüber hinaus auch das Überschreiten einer weiteren, dritten Spannungsschwelle an den Klemmen der Batterie 1. Diese dritte Spannungsschwelle ist dabei geringer als die ebenfalls von dem zweiten Spannungsdetektor 22 detektierte zweite Spannungsschwelle.

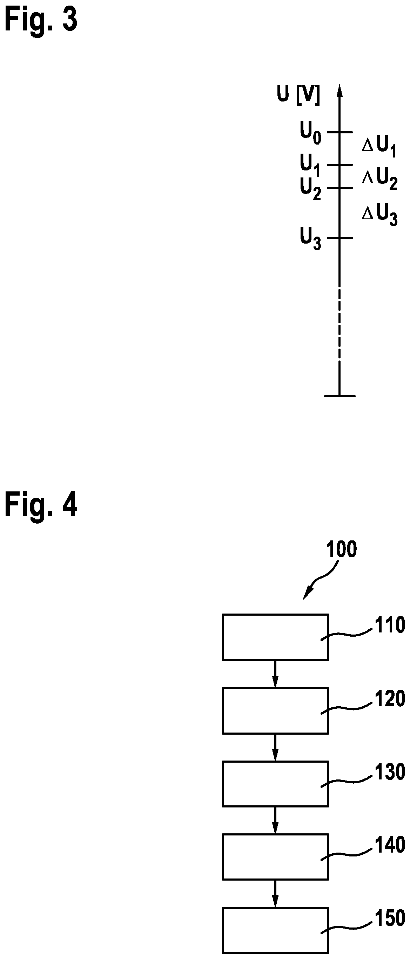

Figur 3 zeigt eine schematische Darstellung der Zusammenhänge der einzelnen Spannungsschwellen. Von oben nach unten gesehen, bezeichnet die oberste Spannung U0 die maximal zulässige Betriebsspannung, bei der die Komponenten der Leistungselektronik 25 betrieben werden können. Ein weiteres Überschreiten dieser maximal zulässigen Betriebsspannung U0 kann dazu führen, dass eine oder mehrere der Komponenten der Leistungselektronik 25 beschädigt würden. Diese Spannung U0 darf daher auf keinen Fall überschritten werden.

Um die Leistungselektronik 25 zuverlässig vor einer unzulässigen Spannungsüberhöhung zu schützen, wird daher der erste Spannungsdetektor 21 so eingestellt, dass er bereits bei einer ersten Spannungsschwelle U1 anspricht. Diese erste Spannungsschwelle U1 ist dabei um eine Spannungsdifferenz ΔU1 geringer als die maximal zulässige Betriebsspannung U0. Somit soll sichergestellt werden, dass der erste Spannungsdetektor 21 auch unter ungünstigen Betriebsbedingungen rechtzeitig anspricht und die maximal zulässige Betriebsspannung U0 auf keinen Fall überschritten wird.

Die Spannungen U2 und U3 bezeichnen ferner die zweite und dritte Spannungsschwelle, also die Spannungsschwellen, bei denen der zweite Spannungsdetektor 22 anspricht.

Solange sich die Klemmspannung an der Batterie 1 unterhalb der dritten Spannungsschwelle U3 befindet, wird die Batterie 1 mit einem maximal möglichen Ladestrom aufgeladen. Erkennt der zweite Spannungsdetektor 22 während des Aufladens der Batterie 1, dass die Klemmenspannung an der Batterie 1 die dritte Spannungsschwelle U3 überschreitet, so wird daraufhin der Strom, mit dem die Batterie 1 geladen wird, reduziert. Durch die Verringerung des Ladestroms in die Batterie 1 verringert sich daraufhin entsprechend dem Innenwiderstand der Batterie 1 auch die Klemmenspannung an der Batterie 1. Somit kann erreicht werden, dass nach Überschreiten der dritten Spannungsschwelle U3 im weiteren Verlauf während des Ladens die Klemmenspannung an der Batterie 1 nur moderat ansteigt.

Steigt die Klemmenspannung an der Batterie 1 während des Ladens über die zweite Spannungsschwelle U2, so wird die Batterie 1 nicht weiter aufgeladen. Somit wird in einem Bereich ΔU3 zwischen der dritten Spannungsschwelle U3 und der zweiten Spannungsschwelle U2 das Aufladen der Batterie 2 soweit vermindert, bis es schließlich beim Erreichen der zweiten Spannungsschwelle U2 vollständig unterbunden wird.

Wird jedoch aus irgendwelchen Gründen die durch den ersten Spannungsdetektor 21 fest vorgegebene erste Spannungsschwelle U1 überschritten, so spricht der Spannungsdetektor 21 sehr rasch an und unterbindet dabei schlagartig ein weiteres Aufladen der Batterie 1.

Für einen optimalen Betrieb ist es dabei wünschenswert, dass einerseits der erste Spannungsdetektor 21 möglichst selten anspricht, aber andererseits die zweite Spannungsschwelle U2, bei der der zweite Spannungsdetektor 22 das Laden der Batterie 1 vollständig unterbindet, möglichst hoch eingestellt werden kann. Hierzu wird zunächst der zweite Spannungsdetektor 22 so eingestellt, dass die zweite Spannungsschwelle U2 in etwa der ersten Spannungsschwelle U1 des ersten Spannungsdetektors 21 entspricht, oder die zweite Spannungsschwelle U2 nur geringfügig unterhalb der ersten Spannungsgrenze U1 liegt. Wird daraufhin während des Aufladens der Batterie 1 aus irgendwelchen Gründen ein Ansprechen des ersten Spannungsdetektors 21 registriert, so wird die zweite Spannungsschwelle U2 abgesenkt. Beispielsweise kann bei jedem Ansprechen des ersten Spannungsdetektors 21 die zweite Spannungsschwelle 2 um einen vorbestimmten Spannungswert ΔU abgesenkt werden. Alternative Verfahren zur Anpassung der zweiten Spannungsschwelle U2 sind darüber hinaus ebenso möglich. Somit sinkt bei jedem Ansprechen des ersten Spannungsdetektors 21 die Ansprechspannung des zweiten Spannungsdetektors 22, was dazu führt, dass im weiteren Verlauf die Wahrscheinlichkeit für ein Ansprechen des ersten Spannungsdetektors 21 zunehmend sinkt.

Weiterhin ist es auch möglich, die dritte Spannungsschwelle U3, die ebenfalls von dem zweiten Spannungsdetektor 22 überwacht wird, ebenfalls immer dann anzupassen, wenn die zweite Spannungsschwelle U2 aufgrund eines Ansprechens des ersten Spannungsdetektors 21 angepasst wird. Auf diese Weise kann beispielsweise das Spannungsintervall ΔU3 zwischen der zweiten Spannungsschwelle und der dritten Spannungsschwelle konstant gehalten werden. Alternativ ist es ebenso möglich, die dritte Spannungsschwelle U3 stets auf einem konstanten Wert zu belassen und nur die zweite Spannungsschwelle U2 anzupassen.

Durch das sukzessive Anpassen der zweiten Spannungsschwelle U2 und gegebenenfalls auch der dritten Spannungsschwelle U3 kann somit der zweite Spannungsdetektor 22 optimal eingestellt werden. Insbesondere ist es möglich, die zweite Spannungsschwelle U2 so anzupassen, dass während des Aufladens der Batterie 1 der erste Spannungsdetektor 21 nicht, oder nur noch sehr selten anspricht. Auf diese Weise werden Einbußen im Fahrkomfort, die mit dem Ansprechen des ersten Überspannungsdetektors verbunden sind, deutlich reduziert. Ferner werden dabei die Spannungsschwellen des zweiten Spannungsdetektors 22 so angepasst, dass ein optimales Laden der Batterie 1 gewährleistet wird.

Am Ende eines Fahrzyklus eines Elektrofahrzeugs mit einer erfindungsgemäßen Überspannungsvorrichtung, das heißt wenn das Elektrofahrzeug abgestellt wird und die Zündung ausgeschaltet wird, wird die angepasste zweite Spannungsschwelle U2 und gegebenenfalls auch eine angepasste dritte Spannungsschwelle U3 in einer Speichervorrichtung 23 abgelegt. Somit können die angepassten neuen Spannungsschwellen in einem folgenden Fahrzyklus aus dieser Speichervorrichtung 23 ausgelesen werden und der zweite Spannungsdetektor 22 kann mit diesen Spannungsschwellen zu Beginn des neuen Fahrzyklus initiiert werden.

Ferner ist es auch möglich, die angepasste zweite Spannungsschwelle U2 und gegebenenfalls auch die angepasste dritte Spannungsschwelle U3 anzuheben. Wird beispielsweise während eines vollständigen Fahrzyklus festgestellt, dass der erste Spannungsdetektor 21 kein Überschreiten der ersten Spannungsschwelle U1 detektiert hat, so kann für einen folgenden Fahrzyklus die zweite Spannungsschwelle U2 und gegebenenfalls auch die dritte Spannungsschwelle U3 um einen vorgegebenen Wert angehoben werden. Alternative Verfahren zur Anhebung der Spannungsschwellen U2 und U3 sind ebenso möglich. So kann beispielsweise eine Anhebung der Spannungsschwellen U2 und U3 erst dann erfolgen, wenn eine vorgegebene Anzahl von Fahrzyklen ohne Ansprechen des ersten Spannungsdetektors 21 erfolgt ist.

Durch dieses iterative Anheben und Absenken der zweiten und gegebenenfalls auch der dritten Spannungsschwelle U2 und U3 kann der zweite Spannungsdetektor 22 optimal auf die Batterie 1 eingestellt werden, um einerseits ein möglichst seltenes Ansprechen des ersten Spannungsdetektors 21 zu erreichen und andererseits dennoch ein bestmögliches Aufladen der Batterie 1 im Generatorbetrieb der Drehfeldmaschine 3 zu erzielen.

Während der erste Spannungsdetektor 21 vorzugsweise als Überspannungsschutz mit diskreten Bauelementen ausgeführt ist, ist der zweite Spannungsdetektor 22 vorzugsweise als programmierbarer Spannungsdetektor ausgeführt. Hierzu wird beispielsweise die Klemmenspannung an der Batterie 1 mittels eines Spannungssensors ermittelt und die so ermittelte Klemmenspannung an eine Steuervorrichtung 24 übertragen. Die Steuervorrichtung 24 wertet die Klemmenspannung aus und überprüft dabei, ob die zweite oder dritte Spannungsschwellen U2 bzw. U3 überschritten wurde. In Abhängigkeit von der ausgewerteten Klemmenspannung der Batterie 1 wird daraufhin die Leistungselektronik 25 des Pulswechselrichters 2 so angesteuert, dass die Batterie 1 entsprechend den vorgegebenen Kriterien aufgeladen wird. Dabei kann unterhalb der dritten Spannungsschwelle U3 die Batterie mit dem maximal möglichen Ladestrom aufgeladen werden, zwischen der zweiten und der dritten Spannungsschwelle wird die Batterie mit einem reduzierten Ladestrom aufgeladen und oberhalb der zweiten Spannungsschwelle U2 wird die Batterie nicht mehr weiter geladen.

Spricht trotz der adaptiven Anpassung des zweiten Spannungsdetektors 22 der erste Spannungsdetektor 21 mehrfach an, so kann daraufhin zur Verbesserung des Fahrkomforts auch dauerhaft in einen sicheren Zustand gewechselt werden, wie er jeweils nach dem Ansprechen des ersten Spannungsdetektors 21 eingestellt wird und bei dem kein weiteres Aufladen der Batterie 1 erfolgt. Spricht der erste Spannungsdetektor 21 während einem Fahrzyklus oder während einer vorgegebenen Zeitdauer häufig an, und wird dabei insbesondere eine vorgegebene Anzahl überschritten, so kann zumindest bis zum Ende des aktuellen Fahrzyklus dauerhaft in den sicheren Zustand übergegangen werden.

Im Voraufgegangenen wurde der erfindungsgemäße Überspannungsschutz im Zusammenhang mit einer Speisung durch eine Drehfeldmaschine beschrieben. Darüber hinaus lässt sich das erfindungsgemäße Prinzip ebenso auch auf Ladevorgänge durch andere Energiequellen, wie beispielsweise eine Gleichstrommaschine anwenden.

Figur 4 zeigt eine schematische Darstellung eines Verfahrens 100 zum Betrieb einer Überspannungsschutzvorrichtung 20 für einen Laderegler, wie zum Beispiel einen Pulswechselrichter 2. Zunächst wird in Schritt 110 ein erster Spannungsdetektor 21 bereitgestellt. Dieser erste Spannungsdetektor 21 ist dazu ausgelegt, ein Überschreiten einer ersten Spannungsschwelle U1 zu erkennen. Weiter wird in Schritt 120 ein zweiter Spannungsdetektor 22 bereitgestellt. Dieser zweite Spannungsdetektor 22 ist dazu ausgelegt, ein Überschreiten einer zweiten Spannungsschwelle U2 zu erkennen und gegebenenfalls auch ein Überschreiten einer dritten Spannungsschwelle U3 zu erkennen. Daraufhin wird in Schritt 130 ein Überschreiten einer ersten Spannungsschwelle U1 erkannt. Anschließend wird in Schritt 140 die zweite Spannungsschwelle U2 in Abhängigkeit von dem erkannten Überschreiten der ersten Spannungsschwelle U1 angepasst. Hierzu wird insbesondere beim Überschreiten der ersten Spannungsschwelle U1 die zweite Spannungsschwelle U2 abgesenkt, beispielsweise durch Verringerung der zweiten Spannungsschwelle U2 um einen vorbestimmten Spannungswert ΔU.

Ferner kann das erfindungsgemäße Verfahren einen Schritt 150 umfassen, in dem angepasste Spannungsschwellen in einer Speichervorrichtung 23 abgelegt werden. Zur Initialisierung des zweiten Spannungsdetektors 22, beispielsweise bei einem Neustart, können diese abgelegten Spannungsschwellen aus der Speichervorrichtung 23 ausgelesen werden und daraufhin der zweite Spannungsdetektor 22 basierend auf den ausgelesenen Spannungsschwellen eingestellt werden.

Ferner kann das erfindungsgemäße Verfahren auch einen Schritt umfassen, bei dem die zweite Spannungsschwelle U2 und gegebenenfalls auch die dritte Spannungsschwelle U3 basierend auf vorgegebenen Kriterien angehoben werden können. Beispielsweise kann eine Anhebung dann erfolgen, wenn während einer vorgegebenen Zeitdauer oder während einer vorgegebenen Anzahl von Fahrzyklen eines Elektrofahrzeuges kein Überschreiten der ersten Spannungsschwelle U1 durch den ersten Spannungsdetektor 21 erkannt wurde.

Zusammenfassend betrifft die vorliegende Erfindung eine Überspannungsschutzvorrichtung für einen Laderegler einer Batterie. Die Überspannungsschutzvorrichtung umfasst dabei einen ersten Spannungsdetektor mit einer fest vorgegebenen Ansprechschwelle und einem zweiten Überspannungsdetektor mit einer adaptiv anpassbaren Spannungsschwelle. Die Spannungsschwelle des zweiten Spannungsdetektors wird dabei in Abhängigkeit vom Ansprechen des ersten Spannungsdetektors angepasst.

## Patentansprüche

1. Überspannungsschutzvorrichtung (20) für eine Ladevorrichtung (2) für eine Batterie (1),
wobei während eines Ladevorgangs in Abhängigkeit vom Innenwiderstand der Batterie (1) die Spannung über den Klemmen der Batterie 1 ansteigt, mit:
einem ersten Spannungsdetektor (21), der die Batteriespannung überwacht, der dazu ausgelegt ist, ein Überschreiten einer ersten Spannungsschwelle (U1) zu erkennen; und
einem zweiten Spannungsdetektor (22), der die Batteriespannung überwacht, der dazu ausgelegt ist, ein Überschreiten einer zweiten Spannungsschwelle (U2) zu erkennen; wobei die zweite Spannungsschwelle (U2) geringer ist als die erste Spannungsschwelle (U1);
wobei die zweite Spannungsschwelle (U2) in Abhängigkeit von einem erkannten Überschreiten der ersten Spannungsschwelle (U1) anpassbar ist,
wobei die Batterie (1) nicht weiter aufgeladen wird, falls der zweite Spannungsfetektor (22) ein Überschreiten der zweiten Spannungsschwelle (U2) erkennt,
**dadurch gekennzeichnet, dass**
die zweite Spannungsschwelle (U2) um einen vorbestimmten Wert reduziert wird, wenn der erste Spannungsdetektor (21) ein Überschreiten der ersten Spannungsschwelle (U1) erkennt.

2. Überspannungsschutzvorrichtung (20) nach Anspruch 1, wobei der zweite Spannungsdetektor (22) ferner dazu ausgelegt ist, ein Überschreiten einer dritten Spannungsschwelle (U3) zu erkennen.

3. Überspannungsschutzvorrichtung (20) nach einem der Ansprüche 1 bis 2, ferner umfassend eine Speichervorrichtung (23), die dazu ausgelegt ist, die zweite Spannungsschwelle (U2) abzuspeichern.

4. Ladevorrichtung (2) für einen elektrischen Energiespeicher (1) mit einer Überspannungsschutzvorrichtung (20) nach einem der Ansprüche 1 bis 3.

5. Ladevorrichtung (2) für einen elektrischen Energiespeicher (1) mit einer Überspannungsschutzvorrichtung (20) nach Anspruch 2, wobei die Ladevorrichtung (2) ferner dazu ausgelegt ist, einen Ladestrom für den elektrischen Energiespeicher zu reduzieren, wenn der zweite Spannungsdetektor (22) ein Überschreiten der dritten Spannungsschwelle (U3) erkennt.

6. Elektrofahrzeug mit einer Ladevorrichtung (2) für einen elektrischen Energiespeicher (1) nach einem der Ansprüche 4 bis 5.

7. Verfahren (100) zum Betrieb einer Überspannungsschutzvorrichtung (20) für eine Ladevorrichtung (2) für eine Batterie (1),
wobei während eines Ladevorgangs in Abhängigkeit vom Innenwiderstand der Batterie (1) die Spannung über den Klemmen der Batterie 1 ansteigt,
mit den Schritten:
Bereitstellen (110) eines ersten Spannungsdetektors (21), der die Batteriespannung überwacht, der dazu ausgelegt ist, ein Überschreiten einer ersten Spannungsschwelle (U1) zu erkennen;
Bereitstellen (120) eines zweiten Spannungsdetektors (22) der die Batteriespannung überwacht, der dazu ausgelegt ist, ein Überschreiten einer zweiten Spannungsschwelle (U2) zu erkennen; wobei die zweite Spannungsschwelle (U2) geringer ist als die erste Spannungsschwelle (U1);
Erkennen (130) eines Überschreitens einer ersten Spannungsschwelle (U1);
Anpassen (140) der zweiten Spannungsschwelle (U2) in Abhängigkeit von einem erkannten Überschreiten der ersten Spannungsschwelle (U1); und
nicht weiter aufladen oder unterbinden der Aufladung der Batterie (1), falls der zweite Spannungsdetektor (22) ein Überschreiten der zweiten Spannungsschwelle (U2) erkennt;
**gekennzeichnet durch**
Reduzieren der zweiten Spannungsschwelle (U2) um einen vorbestimmten Wert, wenn der erste Spannungsdetektor (21) ein Überschreiten der ersten Spannungsschwelle (U1) erkennt.

## Claims

1. Surge arrester (20) for a charging apparatus (2) for a battery (1),
wherein during a charging process the voltage across the terminals of the battery (1) rises on the basis of the internal resistance of the battery (1), having:
a first voltage detector (21) monitoring the battery voltage, which is designed to detect that a first voltage threshold (U1) has been exceeded; and
a second voltage detector (22) monitoring the battery voltage, which is designed to detect that a second voltage threshold (U2) has been exceeded; wherein the second voltage threshold (U2) is lower than the first voltage threshold (U1);
wherein the second voltage threshold (U2) is adaptable on the basis of it having been detected that the first voltage threshold (U1) has been exceeded,
wherein the battery (1) is not charged further if the second voltage detector (22) detects that the second voltage threshold (U2) has been exceeded,
**characterized in that**
the second voltage threshold (U2) is reduced by a predetermined value if the first voltage detector (21) detects that the first voltage threshold (U1) has been exceeded.

2. Surge arrester (20) according to Claim 1, wherein the second voltage detector (22) is also designed to detect that a third voltage threshold (U3) has been exceeded.

3. Surge arrester (20) according to either of Claims 1 and 2, also comprising a memory apparatus (23) designed to store the second voltage threshold (U2).

4. Charging apparatus (2) for an electrical energy store (1) having a surge arrester (20) according to one of Claims 1 to 3.

5. Charging apparatus (2) for an electrical energy store (1) having a surge arrester (20) according to Claim 2, wherein the charging apparatus (2) is also designed to reduce a charging current for the electrical energy store if the second voltage detector (22) detects that the third voltage threshold (U3) has been exceeded.

6. Electric vehicle having a charging apparatus (2) for an electrical energy store (1) according to either of Claims 4 and 5.

7. Method (100) for operating a surge arrester (20) for a charging apparatus (2) for a battery (1),
wherein during a charging process the voltage across the terminals of the battery (1) rises on the basis of the internal resistance of the battery (1),
having the steps of:
providing (110) a first voltage detector (21) monitoring the battery voltage, which is designed to detect that a first voltage threshold (U1) has been exceeded;
providing (120) a second voltage detector (22) monitoring the battery voltage, which is designed to detect that a second voltage threshold (U2) has been exceeded; wherein the second voltage threshold (U2) is lower than the first voltage threshold (U1);
detecting (130) that a first voltage threshold (U1) has been exceeded;
adapting (140) the second voltage threshold (U2) on the basis of it having been detected that the first voltage threshold (U1) has been exceeded; and
not charging the battery (1) further, or preventing the battery from being charged, if the second voltage detector (22) detects that the second voltage threshold (U2) has been exceeded;
**characterized by**
reducing the second voltage threshold (U2) by a predetermined value if the first voltage detector (21) detects that the first voltage threshold (U1) has been exceeded.

## Revendications

1. Dispositif de protection contre les surtensions (20) pour un dispositif de charge (2) pour une batterie (1), la tension aux bornes de la batterie (1) augmentant en fonction de la résistance interne de la batterie (1) pendant une opération de charge, comprenant :
un premier détecteur de tension (21) qui surveille la tension de batterie et qui est conçu pour reconnaître un dépassement d'un premier seuil de tension (U1) ; et
un deuxième détecteur de tension (22) qui surveille la tension de batterie et qui est conçu pour reconnaître un dépassement d'un deuxième seuil de tension (U2) ; le deuxième seuil de tension (U2) étant inférieur au premier seuil de tension (U1) ;
le deuxième seuil de tension (U2) étant adaptable en fonction d'un dépassement reconnu du premier seuil de tension (U1),
la charge de la batterie (1) ne se poursuivant pas dans le cas où le deuxième détecteur de tension (22) reconnaît un dépassement du deuxième seuil de tension (U2),
**caractérisé en ce que**
le deuxième seuil de tension (U2) est réduit d'une valeur prédéterminée lorsque le premier détecteur de tension (21) reconnaît un dépassement du premier seuil de tension (U1).

2. Dispositif de protection contre les surtensions (20) selon la revendication 1, le deuxième détecteur de tension (22) étant en outre conçu pour reconnaître un dépassement d'un troisième seuil de tension (U3).

3. Dispositif de protection contre les surtensions (20) selon l'une des revendications 1 et 2, comprenant en outre un dispositif de mémorisation (23) qui est conçu pour mémoriser le deuxième seuil de tension (U2).

4. Dispositif de charge (2) pour un accumulateur d'énergie électrique (1) comprenant un dispositif de protection contre les surtensions (20) selon l'une des revendications 1 à 3.

5. Dispositif de charge (2) pour un accumulateur d'énergie électrique (1) comprenant un dispositif de protection contre les surtensions (20) selon la revendication 2, le dispositif de charge (2) étant en outre conçu pour réduire un courant de charge pour l'accumulateur d'énergie électrique lorsque le deuxième détecteur de tension (22) reconnaît un dépassement du troisième seuil de tension (U3).

6. Véhicule électrique comprenant un dispositif de charge (2) pour un accumulateur d'énergie électrique (1) selon l'une des revendications 4 et 5.

7. Procédé (100) pour faire fonctionner un dispositif de protection contre les surtensions (20) pour un dispositif de charge (2) pour une batterie (1),
la tension aux bornes de la batterie (1) augmentant en fonction de la résistance interne de la batterie (1) pendant une opération de charge,
comprenant les étapes suivantes :
la fourniture (110) d'un premier détecteur de tension (21) qui surveille la tension de batterie et qui est conçu pour reconnaître un dépassement d'un premier seuil de tension (U1) ; et
la fourniture (120) d'un deuxième détecteur de tension (22) qui surveille la tension de batterie et qui est conçu pour reconnaître un dépassement d'un deuxième seuil de tension (U2) ; le deuxième seuil de tension (U2) étant inférieur au premier seuil de tension (U1) ;
la reconnaissance (130) d'un dépassement du premier seuil de tension (U1) ;
l'adaptation (140) du deuxième seuil de tension (U2) en fonction d'un dépassement reconnu du premier seuil de tension (U1) ; et
la non poursuite ou l'inhibition de la charge de la batterie (1) dans le cas où le deuxième détecteur de tension (22) reconnaît un dépassement du deuxième seuil de tension (U2),
**caractérisé par**
la réduction du deuxième seuil de tension (U2) d'une valeur prédéterminée lorsque le premier détecteur de tension (21) reconnaît un dépassement du premier seuil de tension (U1).
